# EUROPEAN PATENT APPLICATION

(11) **EP 4 742 478 A1**
(43) Date of publication of application: **13.05.2026**
(21) Application number: 24211649.9
(22) Date of filing: 08.11.2024
(51) Int. Cl.: H02J 3/00, H02J 3/36, H02H 7/26

(54) **IMPROVEMENTS RELATING TO THE OPERATION OF ENERGY DISSIPATION CIRCUITS IN POWER TRANSMISSION NETWORKS**

(71) Applicant: GE Vernova Technology GmbH, 5400 Baden (CH)
(72) Inventor: KUMAR, Amit, Stafford, ST16 1WS (GB); SINGH, Amit, 201304 Nodia (IN); THAKUR, Amit Kumar, 201304 Nodia (IN)
(74) Representative: Openshaw & Co.

(57) **Abstract**

There is provided a computer-implemented method (400) of controlling an energy dissipation means for dynamic braking in a power transmission network, the method (400) comprising: monitoring (410) one or more first parameters associated with the power transmission network; determining (420), based on the one or more first parameters, a fault status of the power transmission network; and controlling (430), based on the fault status, the energy dissipation means to perform dynamic braking for the power transmission network; wherein the controlling (430), based on the fault status, the energy dissipation means, comprises adaptively controlling by either of: adjusting (430a) a threshold voltage for activating the energy dissipation means or controlling (430b) the energy dissipation means to perform dynamic braking until the MCB is determined to be in a non-conducting state.

## Description

### Field

The subject matter herein relates generally to the field of power transmission networks and more specifically to the operation of energy dissipation circuits in power transmission networks.

### Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e., power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

Dynamic braking systems (DBS') provide a means of DC line discharge for a power transmission network and are normally installed at the power conversion means. A DBS is a form of energy dissipation system that utilizes a resistive circuit to divert excess energy, giving a power transmission network a temporary disturbance ride-through capability. A DBS will typically regulate the power dissipated in a resistance, with a separate DBS provided and independently controlled for each DC electrical pole of a power transmission network. A DBS may be more generically referred to as a line discharge circuit.

### Summary

HVDC power transmission networks (such as voltage sourced converter (VSC) networks) are typically used to provide an interconnection system between an onshore converter station (which itself is connected to an onshore AC grid) and an offshore converter station (which itself may be connected to an offshore windfarm, for instance). The onshore converter station comprises a first AC:DC power conversion means with the offshore converter station comprising an AC:DC second power conversion means. A power transmission means interconnects the onshore and offshore converter stations. The power transmission means may comprise one or more DC electrical pole lines and may further comprise a neutral arrangement. A DBS is typically provided as a means of DC line discharge for the power transmission medium located at the onshore converter station. Typically, in such a power transmission network, a telecommunication system is provided between the first and second converter stations.

When such a telecommunication system is in service and there is a fault local to the onshore converter station, which causes a block and trip of the respective power conversion means (one or more converter/s), a protection block signal is sent to the offshore station enabling the power conversion means (one or more converter/s) of the offshore station to be blocked and tripped. This tends to mitigate the offshore station continuing to push energy into the power transmission means (the DC electrical pole lines) during 'permanent' fault conditions.

However, when the telecommunication system is out of service, the offshore converter station may not detect the faults at the onshore converter station. This tends to be a particular issue where the fault is on the AC side of the onshore power conversion means. In such scenarios, the offshore converter station tends only to detect the fault owing to a rise in DC voltage on the power transmission means interconnecting the converter stations. The DC voltage rise tends to occur owing to the offshore converter station continuing to push excessive energy into the power transmission means despite the fault.

A DBS is generally expected to function whether the telecommunication system is in-service or out-of-service. To allow the offshore converter station to detect faults without telecommunication service, the DBS tends to be configured to be initially blocked from operating to allow the DC voltage on the power transmission means to rise above an overvoltage threshold, after which the DBS can operate to dissipate excess energy. Whilst this may indeed enable indirect detection of faults by observing the DC voltage rise, the protection strategy tends to cause excessive DC voltage stress on the power transmission medium and indeed on components connected to the DC system of the power transmission network as a whole. More specifically, if the DBS operation is blocked at the same time as the corresponding main power converter is blocked, to enable the fault detection at the offshore converter station, then the DC components of the DC system tend to see higher transient overvoltage stresses which increases their transient rating requirements. Furthermore, excessive energy can also be accumulated into the converter valves of the converters of the power conversion means' at the converter stations. In fact, in some scenarios, the additional delay in detecting and isolating a faulty electrical pole can increase the risk of a trip of another healthy pole (i.e., in a bipole power transmission network. If, alternatively, the DBS is kept operational to limit the transient overvoltage stresses, then there is a risk that the offshore converters will not be able to detect faults and said faults may therefore persist for longer before being detected.

It is desirable to provide a method and controller for an energy dissipation means that mitigates these issues.

According to a first aspect, there is provided a computer-implemented method of controlling an energy dissipation means for dynamic braking in a power transmission network, the power transmission network comprising a first power conversion means having a first alternating current (AC) side and a first direct current (DC) side, the first AC side being connected to a first AC network via a main circuit breaker (MCB), the first DC side being connected to a power transmission means, wherein the power transmission network further comprises a second power conversion means having a second AC side and a second DC side, the second AC side being connected to a second AC network, the second DC side being connected to the power transmission means, wherein the energy dissipation means is operably connected to the power transmission means, the method comprising: monitoring one or more first parameters associated with the power transmission network; determining, based on the one or more first parameters, a fault status of the power transmission network; and controlling, based on the fault status, the energy dissipation means to perform dynamic braking for the power transmission network; wherein the controlling, based on the fault status, of the energy dissipation means, comprises adaptively controlling the energy dissipation means by either of: adjusting a threshold voltage for activating the energy dissipation means, and controlling the energy dissipation means to perform the dynamic braking when a DC voltage on the power transmission means exceeds the adjusted threshold voltage; or controlling the energy dissipation means to perform dynamic braking until the MCB is determined to be in a non-conducting state. The energy dissipation means may then be blocked from performing the dynamic braking, or the energy dissipation reduced or limited, or the voltage threshold readjusted. The one or more first parameters may be associated with a first protection zone, for instance, of the power transmission network.

As described herein, the control of an energy dissipation circuit is selectively and dynamically adjusted in response to a fault status which may be related to detecting a fault in the first protection zone of the power transmission network.

A threshold voltage (also referred to as an operating threshold) normally used for triggering activation of the energy dissipation circuit may be adaptively adjusted based on the fault status. For instance, if the fault is a temporary fault the power transmission network is expected to `ride-through' then the threshold voltage may not be adjusted. Or if the fault status relates to a fault outside the particular zone being monitored, the threshold voltage may not be adjusted. However, for more significant faults such as 'permanent' faults resulting in a tripping or blocking of the first power conversion means, and/or the fault occurring in the zone being protected, the threshold voltage may be adjusted to ensure the energy dissipation means does not operate to dissipate excess energy and the DC voltage rise on the power transmission means is significant enough to be cause a trip or block of the second power conversion means.

A 'normal' threshold voltage for the energy dissipation means may be the threshold used for faults that are temporary and the first power conversion means is desired to `ride-through' said faults. Such a normal threshold may be 1.05 or 1.1 per unit of DC voltage. The adjusted threshold voltage tends to be higher or lower than this normal threshold. By adjusting this threshold in the presence of a permanent fault, the DC voltage profile measured/detected at the second power conversion means tends to be different than for temporary ride-through faults. This differentiation tends to be indicative of the different fault type allowing protective action to be taken at the second power conversion means (blocking and tripping the second power conversion means).

By way of example, if the normal threshold voltage were 1.1 per unit. The proposed methods herein may cause the energy dissipation means to activate when the DC voltage exceeds 1.1 per unit for temporary faults, but if the fault is determined to be a permanent fault, the adjusted threshold voltage will be used and the energy dissipation means only activate at the higher value (which may be 1.15 per unit, for instance). The DC voltage rise of the DC system can be detected by the second power conversion means as the trigger for protective action.

Alternatively, the energy dissipation means may only be allowed to perform dynamic braking until a MCB is determined to be open or in the non-conducting state. This tends to allow for energy to dissipate until the MCB is opened such that transient stresses on the DC equipment are optimized. Once the MCB is confirmed as being in the open or non-conducting state, the energy dissipation means can be blocked to allow the DC voltage to rise on the DC system for detection at the second power conversion means. The MCB being in the open state tends also to be indicative of a permanent fault. By blocking the operation of the energy dissipation means the DC voltage on the power transmission means can be made to rise such that the second power conversion means indirectly detects the fault and is tripped/blocked.

By dynamically controlling the energy dissipation, a protection methodology is provided that maintains the use of a dissipation circuit in a power transmission network to minimise transient over-voltage on the first power conversion means, whilst at the same time allowing for a DC voltage rise on the interconnecting power transmission means enabling a second (remote) power conversion means to detect indirectly the fault (owing to the DC voltage rise). This tends to be particularly advantageous where a separate telecommunication between the first and second power conversion means is not available to otherwise report the fault.

Expressed differently, the method described herein tends to enable the communication of the occurrence of a permanent or significant fault at a local converter station (the first power conversion means) which may be an onshore converter station, to a remote converter station (the second power conversion means) which may be an offshore converter station of the same power transmission network, even in the absence of telecommunication.

The methods described herein tend to strike a balance between optimisation of energy in a DC power transmission means whilst avoiding overvoltage stress or overcharging on converters/converter valves of the power conversion means. Specifically, the methods described herein tend to limit the overvoltage stress on the DC power transmission means which tends to limit the energy requirement and related costs of other related components such as surge arrestors. Moreover, the methods described herein tend to limit the overvoltage stress on the power conversion means, which saves significant cost by enabling the optimization of rating of the converters (i.e., the number of VSMs needed).

The power transmission means may comprise a first electrical pole (for a monopole network, for instance) and/or a second electrical pole (for instance for a bipole power transmission network). The power transmission means may further comprise a neutral arrangement.

The first power conversion means may be a converter station comprising one or more power converters. The power converters may be AC:DC power converters, for instance.

The first protection zone may be a region, section, area or volume of the power transmission network. The first protection zone may comprise one or more components of the power transmission network that are being monitored for faults.

The monitoring may be performed by receiving signals from a measurement or sensing means, such as a voltage or current measurement means, or by receiving signals from other components of the power transmission network or controllers associated therewith. For instance, signals may be received from circuit breakers or controllers for circuit breakers such as relays.

The non-conducting state of a circuit breaker may be referred to herein as the "open" state. The conducting state of a circuit breaker may be referred to herein as the "closed" state.

The method may comprise adjusting the threshold voltage for activating the energy dissipation means. In such examples, the method may further comprise: determining whether the MCB is in the non-conducting state and, if the MCB is in the non-conducting state, blocking the energy dissipation means from performing the energy dissipation/dynamic braking.

The second power conversion means may then detect the fault condition by detecting the DC voltage rise on the power transmission means. Accordingly, operation of the energy dissipation/dynamic braking is blocked to allow for the rise of the DC voltage and the resultant blocking of the second power conversion means.

The controlling of the energy dissipation means to perform dynamic braking until the MCB is determined to be in a non-conducting state, may comprise: controlling the energy dissipation means to perform the dynamic braking until a signal is received that is indicative of the MCB being in the non-conducting state; or controlling the energy dissipation means to perform the dynamic braking for a first predetermined time period, the first predetermined time period corresponding to a time for switching the main circuit breaker from a conducting state to the non-conducting state. The first predetermined time period may be 50-100ms, for instance.

If the MCB is in the non-conducting state then the MCB is open and a so-called 'permanent' fault has occurred whereby the first power conversion means tends to become blocked. Accordingly, it is desirable for the second power conversion means to detect the fault even if telecommunication is not available. Accordingly, the operation of the energy dissipation means needs to be stopped to allow for the DC voltage on the power transmission means to increase, to indicate to the second power conversion means that the permanent fault has occurred. In the period prior to the MCB status being determined, the dynamic braking should operate normally to ensure fault ride-through and dissipation of excess energy on the power transmission medium. After a fault has been determined, the dynamic braking may therefore operate normally until a signal indicating the status of the MCB is received, or, for a time period equivalent to the time required to switch the MCB between the conducting-state (closed) and the non-conducting state (open). This allows for excess energy to be dissipated until the MCB is determined to be open.

The controlling, based on the fault status, of the energy dissipation means to perform dynamic braking in the power transmission network, may comprise: determining whether the fault status is indicative of a permanent fault whereby the first power conversion means is blocked; and then if the fault status is indicative of the permanent fault, controlling the energy dissipation means to perform the dynamic braking.

The methods described herein tend to allow control of dynamic braking in an adaptive manner dependent upon the nature or 'status' of a fault. More specifically, for permanent faults the dynamic braking is performed differently to non-permanent or ride-through faults. This enables a second power conversion means remote from the first power conversion means to indirectly detect and differentiate permanent faults owing to an observed DC voltage rise on the power transmission means.

The one or more first parameters may comprise parameters selected from the list of parameters consisting of: a block status of the first power conversion means; an operational state of the main circuit breaker; measurement of one or more electrical quantities (e.g., current and/or voltage), a time delay until a command for switching the main circuit breaker is issued; a location of a fault; and a zone of the fault.

The block status may be blocked or unblocked, which may be indicated by a binary or TTL signal for instance. The operational state may be conducting (i.e., closed) or non-conducting (i.e., open). Again, this may be indicated by a binary signal or TTL signal, for instance. The location of the fault may be a specific location, such as on or with a particular component. The zone of the fault may be broader than a location and specify a geographic area or a collection of components of the power transmission network, for instance.

The first protection zone may be on the first AC side of the first power conversion means.

Because the fault status is based on parameters associated with the first protection zone, 'permanent' faults and ride-through faults can be distinguished more easily from each other. Faults occurring at the first AC side of the first power conversion means tend not to be directly observed by the second power conversion means. Furthermore, faults at particular locations on the first AC side are more likely to result in a blocking of the first power conversion means, a so-called 'permanent' fault. Accordingly, by monitoring the first protection zone as the first AC side, the control of dynamic braking tends to be adaptable based on the fault status, thereby allowing the second power conversion means to differentiate and respond to (i.e., by blocking the second power conversion means) permanent faults.

The method may further comprise: determining whether a telecommunication link is available between the first power conversion means and the second power conversion means; and if the telecommunication link is not available, controlling, based on the fault status, the energy dissipation means to perform the dynamic braking in the power transmission network.

If the telecommunication link is available between the power conversion means', then a fault at one power conversion means can be signaled directly to the other power conversion means. However, in the scenario where the telecommunication link is not available, the methods described herein tend to enable a remote power conversion means to detect (by mean of letting disturbance occur on electrical quantities) a local power conversion means fault by sensing a change in the DC voltage.

The method may further comprise: determining if the DC voltage on the power transmission medium is greater than a second threshold voltage for a second predetermined time period; and if so blocking and tripping the second power conversion means.

The second threshold voltage may be the same as the threshold voltage or adjusted threshold voltage or may be a different threshold. It may be the edges of the normal operating voltage range. By blocking and tripping the second power conversion means after the second predetermined time period, a fail-safe mechanism is integrated into the method. The method tends to ensure that the second power conversion means is blocked and tripped i.e., stops forcing electrical energy into the power transmission means, if the second threshold voltage is satisfied for the second predetermined time period. This tends to reduce the risk of overloading components on the power transmission means and/or the dissipation means.

The method may comprise: determining a DC current of the power transmission means; and if the DC current is substantially zero, operating one or more components on the power transmission means to isolate the power transmission means.

When the DC current on the power transmission means becomes substantially zero, the power transmission means tends to be able to be disconnected from the power conversion means. This tends to allow for a faulty electrical pole to be further investigated and remedial action taken following determination of a fault. The one or more components may be circuit breakers, for instance.

The second AC network may comprise a power generation network.

The power generation network may comprise a renewable power generation network selected from the list of renewable power generation networks consisting of: a wind-power generation network; a solar-power generation network; and a bio-power generation network.

As will be appreciated by the disclosure herein, the controlling of the operation of the dynamic braking may comprise increasing or decreasing operating threshold of the associated energy dissipation means and/or the blocking of valves of the energy dissipation means.

According to a second aspect, there is provided controller for controlling an energy dissipation means for dynamic braking in a power transmission network, the power transmission network comprising a first power conversion means having a first AC side and a first DC side, the first AC side being connected to a first AC network via a MCB, the first DC side being connected to a power transmission means, wherein the power transmission network further comprises a second power conversion means having a second AC side and a second DC side, the second AC side being connected to a second AC network, the second DC side being connected to the power transmission means, wherein the energy dissipation means is operably connected to the power transmission means, the controller comprising: a memory; and at least one processor; wherein the memory comprises computer-readable instructions which when executed by the at least one processor cause the controller to: monitor one or more first parameters associated with a first protection zone of the power transmission network; determine, based on the one or more first parameters, a fault status of the power transmission network; and control, based on the fault status, the energy dissipation means to perform dynamic braking for the power transmission network, by causing the controller to: adjust a threshold voltage for activating the energy dissipation means, and control the energy dissipation means to perform the dynamic braking when a DC voltage on the power transmission means exceeds the adjusted threshold voltage; or control the energy dissipation means to perform dynamic braking until the MCB is determined to be in a non-conducting state, and then block the energy dissipation means from performing the dynamic braking.

The at least one processor may cause the controller to: control the energy dissipation means to perform the dynamic braking until the MCB is determined to be in a non-conducting state, by causing the controller to: control the energy dissipation means to perform the dynamic braking until a signal is received that is indicative of the MCB being in the non-conducting state; or control the energy dissipation means to perform the dynamic braking for a first predetermined time period, the first predetermined time period corresponding to a time for switching the main circuit breaker from a conducting state to the non-conducting state.

More generally, there is provided a controller for controlling an energy dissipation means for dynamic braking in a power transmission network, the controller comprising at least one memory coupled with at least one processor, wherein the at least one memory comprises computer readable instructions which when executed by the at least one processor, causes the controller to perform the method of the first aspect.

According to a third aspect, there is provided a power transmission network, comprising: a first power conversion means having a first AC side and a first DC side;

a first AC network; a MCB; a second power conversion means having a second AC side and a second DC side; a second AC network; a power transmission means; wherein the first AC side of the first power conversion means is connected to the first AC network via the MCB, the first DC side of the first power conversion means being connected to a power transmission means; wherein the second AC side of the second power conversion means is connected to the second AC network, the second DC side of the second power conversion means is connected to the power transmission means; an energy dissipation means operably connected to the power transmission means; and the controller of the second aspect for controlling the energy dissipation means.

According to a fourth aspect, there is provided a computer program comprising instructions which when executed by a processor of a controller for an energy dissipation means, causes the controller to perform the method of the first aspect.

According to a fifth aspect, there is provided a non-transitory computer-readable storage medium comprising the computer program of the fourth aspect.

Generally, a method of dynamic braking or operating a DBS is provided herein. The disclosure herein proposes a protection methodology that uses an energy dissipation means, also referred to as a line discharge circuit or DBS, to minimise the transient over-voltage on a power converter and at the same time allow a remote station to detect (by means of letting disturbance occur on electrical quantities) a local station fault by sensing a change in a DC voltage. The DC line discharge circuit connected at local station (i.e., local faulty station) changes its operating threshold or its blocking delay in response to detecting fault in a particular protection zone.

It will be appreciated that particular features of different aspects share the technical effects and benefits of corresponding features of other aspects of the invention. More specifically, the controller, power transmission network, computer program, non-transitory computer-readable medium, share the technical effects and benefits of the computer-implemented method.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, examples and alternatives set out in the preceding paragraphs, and the claims and/or the following description and drawings, and in particular the individual features thereof, may be taken independently or in any combination. That is, all examples and all features of any example can be combined in any way and/or combination, unless such features are incompatible.

### Brief description of the drawings

The invention will now be described by way of example only and with reference to the accompanying drawings, in which:
Figure 1 shows generically, an example of a power transmission network, in accordance with aspects of the present disclosure.
Figure 2 shows a controller for an energy dissipation means, in accordance with aspects of the present disclosure.
Figure 3 shows a schematic of an offshore interconnection VSC HVDC scheme, in accordance with aspects of the present disclosure.
Figure 4 shows a method of controlling an energy dissipation means for dynamic braking in a power transmission network, in accordance with aspects of the present disclosure.
Figure 5 shows a protective sequence of fault detection and isolation in a power transmission network, in accordance with aspects of the present disclosure.
Figure 6 shows a further protective sequence of fault detection and isolation in a power transmission network, in accordance with aspects of the present disclosure.

### Detailed description

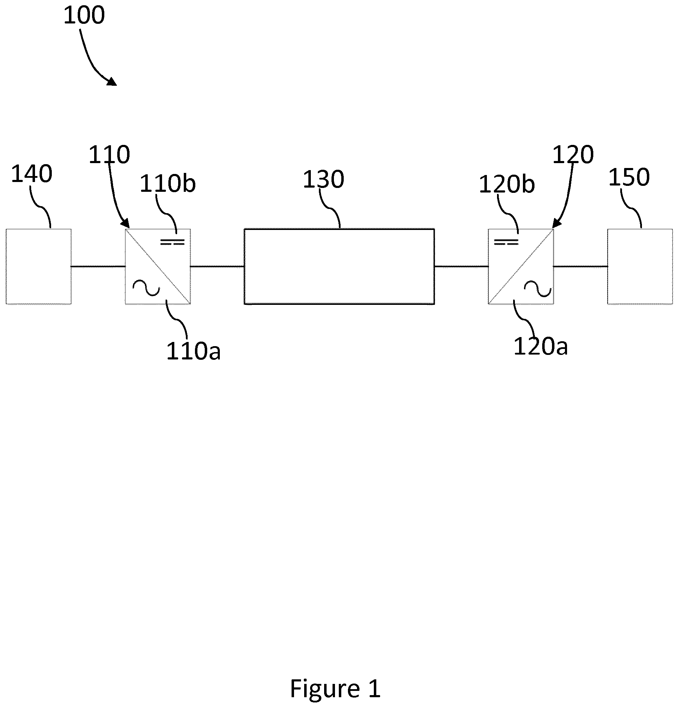

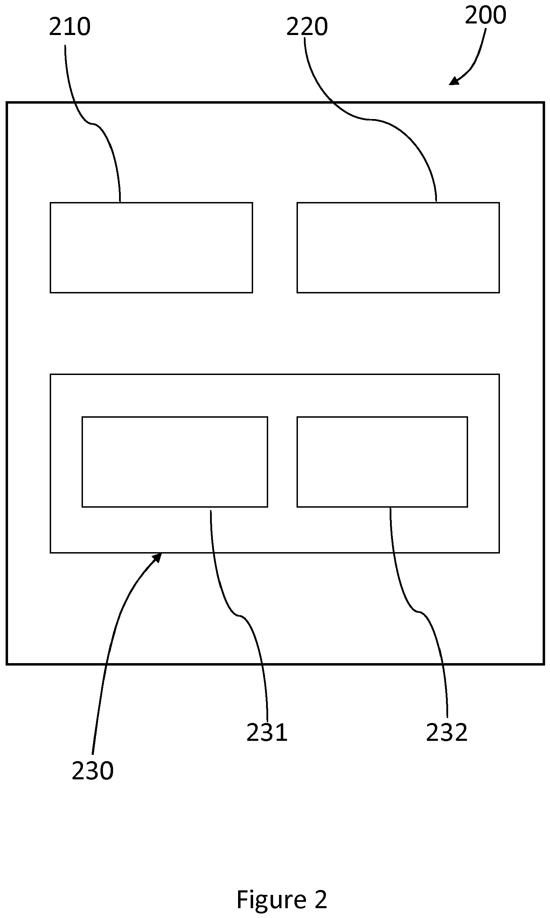

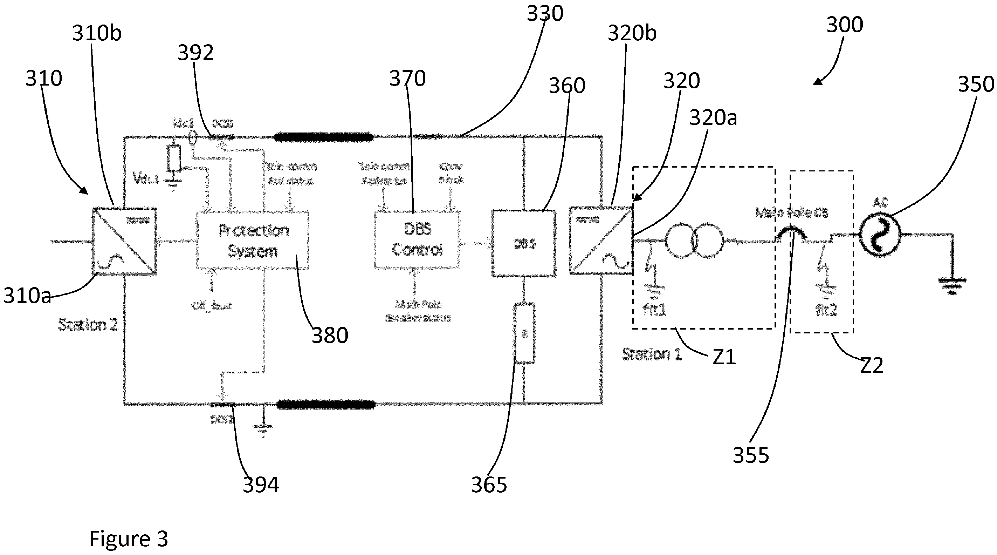

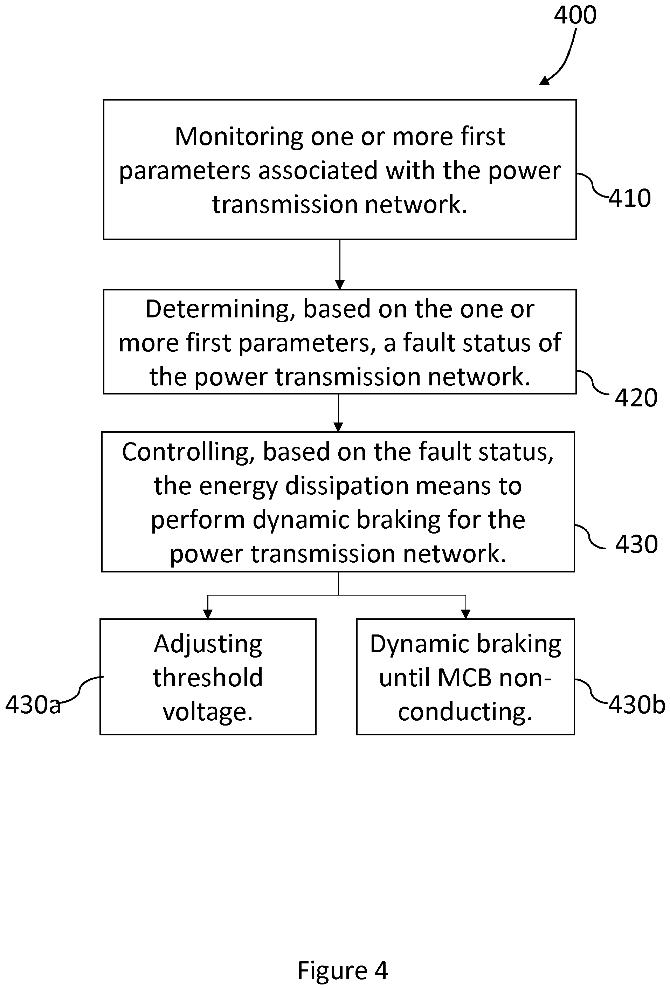

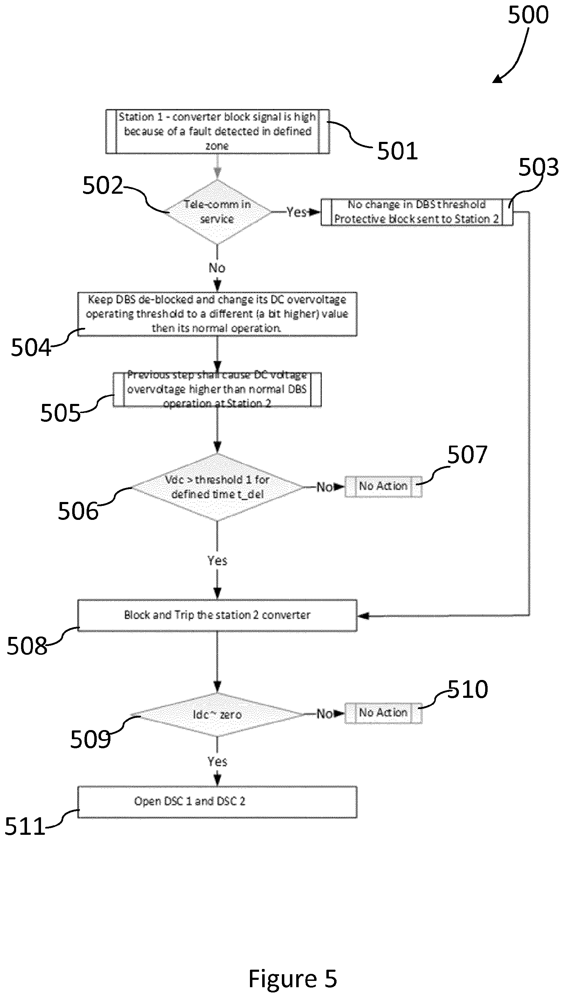

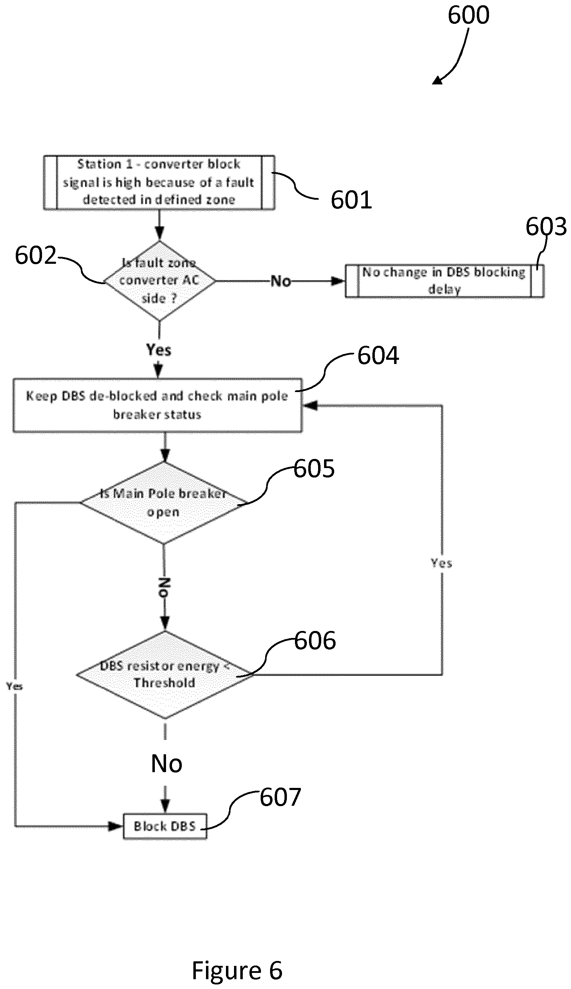

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks such as network 300 of Figure 3, and/or networks comprising the controller 200 of Figure 2, for instance. Furthermore, the method 400 of Figure 4, the method 500 of Figure 5 and the method 600 of Figure 6 may be performed in such a power transmission network 100.

The power transmission network 100 illustrates a second power conversion means 110 (also known as a converter station) and a first power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 120 comprises a first AC side 120a and a first DC side 120b. Generically, the second power conversion means 110 comprises a second AC side 110a and a second DC side 110b.

The first power conversion means 120 is connected to a first AC network 150. The first AC network 150 is connected to the first AC side 120a of the first power conversion means 120.

The second power conversion means 110 is connected to a second AC network 140. The second AC network 140 is connected to the second AC side 110a of the second power conversion means 110. The first AC network 150 and/or second AC network 140 may be electrical power transmission systems comprising power generation apparatus, transmission apparatus, distribution apparatus, and electrical loads. The first AC network 150 and/or second AC network 140 may comprise a renewable power generation network such as a wind-power generation network, solar-power generation network, bio-power generation network. The first AC network 150 or second AC network 140 may be a consumer network. By way of non-limiting example, the first AC network 150 may be a consumer network, with second AC network 140 being a power generation network, or vice versa, for instance.

Also shown is a power transmission means 130 interconnecting the first power conversion means 120 and the second power conversion means 110. The power transmission means 130 is connected between the first DC side 120b of first power conversion means 120 and the second DC side 110b of the second power conversion means 110. The power transmission means 130 may comprise electrical cables or lines and other electrical components interconnecting the power conversion means 110, 120. For instance, the power transmission means 130 may comprise a conductor providing a first electrical pole; and/or a conductor providing a second electrical pole. A neutral arrangement may also be provided interconnecting the power conversion means 110, 120. The power transmission means 130 provides the medium through which DC power is transmitted between the power conversion means 110, 120.

The operation of the power transmission system 100 can be generically described as follows. The second AC power generation network 140 generates AC power that is provided to second power conversion means 110 at the second AC side 110a. The second power conversion means 110 converts the received AC power to a DC power for transmission to first power conversion means 120. The DC power is transmitted from the second DC side 110b over the power transmission means 130 to the first DC side 120b of first power conversion means 120. The first power conversion means 120 converts the received DC power back to AC power. The AC power is then provided from the first AC side 120a to the first AC network 150 for consumption, for instance. In particular examples, the power conversion means 110 and 120 may be geographically remote. For instance, the second power conversion means 110 may reside with an off-shore wind farm and the first power conversion means 120 may reside on-shore.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use `power electronics'. Power electronic converters may comprise multi-level voltage sourced converters, for instance.

It will be appreciated that cables or lines used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables/lines and their associated layers may be varied according to the specific application (and in particular, operational voltage requirements). Cables/lines may further comprise strengthening or `armouring' in applications such as subsea installation. Cables/lines may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the AC networks 140, 150.

The power transmission network 100 may be operated using methods such as synchronous grid forming (SGFM) wherein either or both of the power converters 110, 120 behave as three-phase, positive-phase sequence AC voltage sources behind an impedance, which operate at a frequency synchronous with over SGFM sources connected to the power transmission network 100.

The power transmission network 100 may further comprise a controller for controlling the operation of one or more components of the power transmission network 100. For instance, a controller may be provided for executing the methods described herein. Such a controller may be referred to as a controller means or control means. The controller may be the controller 200 of Figure 2.

Figure 2 illustrates a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is shown as comprising a transceiver arrangement 230 which may comprise a separate transmitter 231 and receiver 232. The transceiver arrangement 230 may be used to operatively communicate with other components or features described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may be coupled to the transceiver 230.

The memory 210 may be a computer readable storage medium. For instance, the memory 210 may include a non-volatile computer storage medium. For example, the memory 210 may include a hard disk drive, flash memory etc.

Whilst not shown, the controller 200 may additionally include a user input device interface and/or a user output device interface, which may allow for visual, audible or haptic inputs/outputs. Examples include interfaces to electronic displays, touchscreens, keyboards, mice, speakers and microphones.

Figure 3 shows a schematic of an offshore interconnection VSC HVDC scheme 300, in accordance with aspects of the present disclosure. The VSC HVDC scheme may also be referred to as a power transmission network.

The scheme 300 comprises a first power conversion means 320, shown as `Station 1', having a first AC side 320a and a first DC side 320b. The first power conversion means 320 comprises one or more AC:DC converters. The first power conversion means 320 is an onshore station for an offshore windfarm interconnection.

A first AC network 350 is shown. The AC network 350 is an AC grid. The first AC side 320a of the first power conversion means 320 is connected to the first AC network 350 via an MCB 355.

A power transmission means 330 is also shown. The first DC side 320b of the first power conversion means 320 is connected to the power transmission means 330.

The scheme 300 comprises a second power conversion means 310, shown as `Station 2', having a second AC side 310a and a second DC side 310b. The second power conversion means 310 comprises one or more AC:DC converters. The second power conversion means 310 is an offshore station of offshore windfarm connection.

A second AC network is not shown. However, the second AC side 310a of the second power conversion means 310 is connected to a second AC network in the form of a windfarm. The second DC side 310b of the second power conversion means 310 is connected to the power transmission means 330.

In a power transmission network such as the scheme 300 shown, the interconnection normally consists of a DBS (a means of DC line discharge i.e., energy dissipation means). This is shown as DBS 360 installed at the first (i.e., onshore) power conversion means 320. More specifically the DBS 360 is operably connected to the power transmission means 330 to allow for selective dynamic braking and energy dissipation through resistor 365. A controller 370, which may be the controller 200 for instance, is also provided for controlling the DBS 360. The controller 370 may receive inputs, referred to herein as first parameters, which include but are not limited to the status of a telecommunication system, the blocked/unblocked status of the first power conversion means 320 and the open/closed (conductive/non-conductive) state of the MCB 355.

The scheme 300 also comprises a protection system 380. The protection system 380 may receive inputs such as measured DC voltages `Vdc1' and DC current `Idc1' on the power transmission means 330. Other inputs include the status of telecommunication and other offshore fault indications. The protection system 380 may provide signals to control the DC circuit breakers DCS1 392 and DCS2 394.

Various other components, such as transformers, earthing, and the like will be familiar to the person skilled in the art.

There is normally a telecommunication system between the stations containing the power conversion means 310, 320. However, the scheme 300 is expected to be operated with and without telecommunication in service. When the telecommunication system in service and there is a fault at onshore converter station and with first power conversion means 320, which causes the block and trip of the power conversion means 320, then a protection block signal is sent to the offshore station and the second power conversion means 310 such that the second power conversion means 310 at offshore station can be blocked and tripped in response to the protection signal. However, with the telecommunication out of service, the offshore station may not detect the faults at the onshore station connected to first AC network 350 (especially faults on the first AC side 350a of the first power conversion means 320). Eventually, the offshore station and the second power conversion means 310 can only detect faults, when the DC voltage rises on power transmission means 330. The DC voltage rises owing to excessive energy pushed into the DC circuit and transmission means 330 from the offshore renewable energy sources.

In order to allow the second power conversion means 310 (the offshore converters) to detect faults at the onshore station (at or near first power conversion means 320) without telecommunication, the DBS 360 is kept blocked, to allow DC voltage on the power transmission means 330 to rise above an overvoltage threshold. However, this protection strategy causes excessive DC voltage stress on the DC system (the transmission means 330 and associated components) and excessive energy is dissipated into the valves of the converters 310, 320. The delay in detecting and isolating a faulty pole, may also lead to the trip of a healthy pole in-case of bipole operating modes.

With reference to the scheme 300 the solutions provided herein will now be described.

This solutions proposed herein adopt a protection methodology by using line discharge circuit (DBS 360) to minimise the transient over-voltage on the converter 310, 320 and at the same time give enough room for the remote station and second power conversion means 310 to detect remote fault by detecting a change in DC voltage on power transmission means 330. The DC line discharge circuit (e.g., DBS 360) connected at the local station with first power conversion means 320 (the faulty station) changes its operating threshold (referred to herein as threshold voltage) or its blocking delay (referred to herein as first predetermined time period) in response to determining a fault status (i.e., a permanent or ride-through/temporary fault).

By way of a first example, when the controller 370 determines a fault in a particular protective zone (e.g., 'flt1' in Figure 3 on the first AC side 320b of first power conversion means 320) which leads to the station 1 power conversion means 320 becoming blocked, the DBS controller 370 changes the threshold of operation of the DBS, i.e., increases the DC threshold voltage at which the DBS 360 starts operating.

By way of a second example, when the controller 370 determines a fault in a particular protective zone (again 'flt1') which leads to the station 1 power conversion means 320 becoming blocked, the DBS controller 370 changes the blocking time delay (the first predetermined time period) of the DC line discharge circuit (e.g., DBS 360) connected at the local station (faulty station) with first power conversion means 320. This blocking delay may be coordinated with the main pole circuit breaker 355 status. In other words, the line discharge circuit (DBS 360) becomes blocked when a signal indicative of the 'open' status of the main pole circuit breaker 355 is received.

The remote and un-faulted station with second power conversion means 310 observes the DC voltage on power transmission means 330 increase owing to an increase in the threshold voltage of DBS 360 (as per the first example above) or owing to the blocking of the DBS 360 (as per the second example above). This is detected by the offshore second power conversion means 310 as a fault at the remote station with the first power conversion means 320. Since the increase in the operating threshold of the DBS 360 or the eventual blocking of the DBS 360 occurs because of detecting a fault in a particular protection zone or detecting a permanent fault, the offshore converter with second power conversion means 320 can differentiate between ride-through fault events and permanent faults. For example, a fault `flt2' in Figure 3 between the MCB 355 and AC network 350, whilst in the zone Z2, may still not be a permanent fault that blocks conversion means 320 unless the MCB 355 is opened. The fault 'flt1' in zone `Z1' may however be deemed a permanent fault that would block conversion means 320 owing to proximity to the conversion means 320. A permanent fault may alternatively or in addition be determined based on the block status of the first power conversion means 320 with the status of the MCB 355 being used to determine when to stop or block the DBS 360.

Figure 4 shows a method 400 of controlling an energy dissipation means 360 for dynamic braking in a power transmission network 300. The power transmission network 300 comprises a first power conversion means 320 having a first AC side 320a and a first DC side 320b. The first AC side 320a is connected to a first AC network 350 via a MCB 355. The first DC side 320b is connected to a power transmission means 330. The power transmission network 300 further comprises a second power conversion means 310 having a second AC side 310a and a second DC side 310b. The second AC side 310a is connected to a second AC network. The second DC side 310b is connected to the power transmission means 330. The energy dissipation means 360 is operably connected to the power transmission means 330.

The method 400 comprises monitoring 410 one or more first parameters associated with the power transmission network 300.

The method 400 comprises determining 420, based on the one or more first parameters, a fault status of the power transmission network 300.

The method 400 comprises controlling 430, based on the fault status, the energy dissipation means 360 to perform dynamic braking for the power transmission network 300.

Wherein the step 430 of controlling, based on the fault status, the energy dissipation means 360, comprises adaptively controlling by either of: adjusting 430a a threshold voltage for activating the energy dissipation means 360, and controlling the energy dissipation means 360 to perform the dynamic braking when a DC voltage on the power transmission means 330 exceeds the adjusted threshold voltage; or controlling 430b the energy dissipation means 360 to perform dynamic braking until the MCB 355 is determined to be in a non-conducting state.

The adjusting 430a of the threshold voltage may comprise increasing or decreasing the threshold voltage from a "normal" value. The DC system electrical parameters tend to change as a result of this change which can be detected at the second power conversion means.

Figure 5 shows a protective sequence 500 of fault detection and isolation in a power transmission network, in accordance with aspects of the present disclosure. The protective sequence 500 may be in accordance with the first example referred to above with regard to Figure 3.

At step 501, the station 1 power conversion means 320 block signal received by controller 370 is high because of the fault 'flt1' detected in the defined zone `Z1'.

At step 502, it is determined whether there is a telecommunication service available between the station 1 power conversion means 320 and the station 2 power conversion means 310.

If at step 502 it is determined that the telecommunication service is available, then the sequence 500 proceeds to step 503 and no change is made to the threshold voltage of DBS 360. Instead, a protective block signal is sent via the telecommunication service to the second power conversion means 310. The sequence 500 then jumps to step 508 where the station 2 power conversion means 310 is blocked and tripped.

If at step 502 it is determined that the telecommunication service is not available, then the sequence 500 proceeds to step 504. In step 504, the DBS 360 is kept deblocked and has its threshold voltage adjusted to a different value (i.e., a higher value than during normal operation).

At step 505, the DC voltage on power transmission means 330 shall rise higher than during normal operation of DBS 360. This will be detected at the second power conversion means 310 in the station 2.

At step 506, it is determined at station 2 whether the DC voltage is greater than a threshold for a certain period of time. If the determination is that it is not, then at step 507 no action is taken with the second power conversion means 310. If the determination is that it is, then at step 508 the second power conversion means 310 is blocked and tripped.

At step 509 the DC current 'Idc' is measured and it is determined whether the DC current is substantially zero. If the determination is that it is not, then at step 510 no action is taken. If the determination is that it is, then at step 511 the circuit breakers DSC1 392 and DSC2 394 are opened.

Figure 6 shows a further protective sequence 600 of fault detection and isolation in a power transmission network, in accordance with aspects of the present disclosure. The protective sequence 600 may be in accordance with the second example referred to above with regard to Figure 3.

At step 601, the station 1 power conversion means 320 block signal received by controller 370 is high because of the fault 'flt1' detected in the defined zone `Z1'.

At step 602, it is determined whether the fault zone '21' where the fault is determined is on the first AC side 320a. If the determination is that it is not, then at step 603 no change in the blocking delay of the DBS 360 is applied. If the determination is that it is, then at step 604 the DBS 360 is kept de-blocked and the MCB 355 status is checked.

At step 605 it is determined whether the MCB 355 is open. If the MCB 355 is open then the sequence 600 jumps to step 607 and the DBS 360 is blocked. If the MCB 355 is not open then the sequence 600 proceeds to step 606.

At step 606 the resistor energy of the DBS 360 is checked to determine if it is less than a threshold. If it is then the sequence 600 returns to step 604. If it is not then the sequence 600 proceed to step 607 and the DBS 360 is blocked.

Whilst the disclosure herein may indicate a particular configuration of power transmission network, this is not intended to be limiting. For instance, the disclosure herein may be applicable to power transmission networks within scope of the appended set of claims. This may include monopole and bipole power transmission networks, for instance.

It will be understood that an energy dissipation means may be a dissipation circuit, such as a dynamic braking system.

Whilst the disclosure herein may refer to offshore to onshore interconnections, this is not intended to be limiting. The disclosure herein may be applied to any power transmission network. Similarly, whilst the disclosure herein may refer to HVDC power transmission networks, this is not intended to be limiting.

Whilst the disclosure herein may refer to particular zones that are monitored for faults, this is for illustrative purposes. Other zones for monitoring may be identified and the locations of faults in the other zones may determine whether a fault status is a ride-through type fault or a permanent fault.

It will be appreciated that the controller described herein may receive a number of different signals and parameters to determine a fault status including but not limited to a blocking signal for a converter or power conversion means, the MCB status, the fault location and the telecommunication availability, for instance.

Generally, the disclosure herein provides a solution to the problem of communicating the occurrence of a permanent fault at local converter station to a remote converter station in the absence of telecommunication between them, while also optimising the energy in interconnecting DC line and avoiding overvoltage stress on the converter valves.

Further advantages of the invention described herein include mitigating healthy electrical poles becoming blocked owing to faults on faulty electrical poles.

Further advantages of the invention described herein tends to be enabling the optimisation of the number of VSMs and/or eliminating the need to bypass VSMs.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein also provides a controller for an energy dissipation circuit (e.g., a DBS) in an electrical assembly, the electrical assembly comprising a first power converter having an AC side and a DC side and the energy dissipation circuit, the AC side of the first power converter being connected to an AC network via a main pole circuit breaker and the DC side being connected to at least one power transmission medium, wherein the energy dissipation circuit is operably connected to the power transmission medium, wherein the controller is programmed to selectively control activation of the energy dissipation circuit to carry out a dynamic braking operation, the controller comprising: a monitoring unit for monitoring one or more parameters associated with a fault in the AC network and power converter circuit; and a processing unit configured to determine the nature of the fault based on the monitored parameters and further configured to control the operation of the energy dissipation circuit if the fault is identified as a permanent fault.

The monitored parameters may include one or more of the following: a block status of the first power converter; an operating status of the main pole circuit breaker; a time until the command for operation of the main pole circuit breaker is issued; a location of a fault; and a zone in which the fault has occurred.

The controller may be additionally configured to detect a loss of telecommunication between the first power converter and a second power converter connected to the transmission medium.

The controlling or stopping the operation of the DBS may involve: increasing the operating threshold voltage of the DBS; blocking the valves of the DBS; or decreasing the operating threshold voltage of the DBS.

It will be appreciated that the control of the energy dissipation means as referred to herein may be for the purposes of energy dissipation and/or dynamic braking.

## Claims

1. A computer-implemented method of controlling an energy dissipation means for dynamic braking in a power transmission network, the power transmission network comprising a first power conversion means having a first alternating current `AC' side and a first direct current `DC' side, the first AC side being connected to a first AC network via a main circuit breaker 'MCB', the first DC side being connected to a power transmission means, wherein the power transmission network further comprises a second power conversion means having a second AC side and a second DC side, the second AC side being connected to a second AC network, the second DC side being connected to the power transmission means, wherein the energy dissipation means is operably connected to the power transmission means, the method comprising:
monitoring one or more first parameters associated the power transmission network;
determining, based on the one or more first parameters, a fault status of the power transmission network; and
controlling, based on the fault status, the energy dissipation means to perform dynamic braking for the power transmission network;
wherein the controlling, based on the fault status, the energy dissipation means, comprises adaptively controlling the energy dissipation means by either of:
adjusting a threshold voltage for activating the energy dissipation means, and controlling the energy dissipation means to perform the dynamic braking when a DC voltage on the power transmission means exceeds the adjusted threshold voltage; or
controlling the energy dissipation means to perform dynamic braking until the MCB is determined to be in a non-conducting state.

2. The computer-implemented method of claim 1, wherein the one or more first parameters are associated with a first protection zone of the power transmission network.

3. The computer-implemented method of any one of claims 1-2, wherein the method comprises adjusting the threshold voltage for activating the energy dissipation means, wherein the method further comprises:
determining whether the MCB is in the non-conducting state and, if the MCB is in the non-conducting state, blocking the energy dissipation means from performing the dynamic braking.

4. The computer-implemented method of any one of claims 1-2, wherein controlling the energy dissipation means to perform dynamic braking until the MCB is determined to be in a non-conducting state, comprises:
controlling the energy dissipation means to perform the dynamic braking until a signal is received that is indicative of the MCB being in the non-conducting state; or
controlling the energy dissipation means to perform the dynamic braking for a first predetermined time period, the first predetermined time period corresponding to a time for switching the main circuit breaker from a conducting state to the non-conducting state.

5. The computer-implemented method of any one of the preceding claims, where the controlling, based on the fault status, the energy dissipation means to perform dynamic braking in the power transmission network, comprises:
determining whether the fault status is indicative of a permanent fault whereby the first power conversion means is blocked; and then
if the fault status is indicative of the permanent fault, adaptively controlling the energy dissipation means.

6. The computer-implemented method of any one of the preceding claims, wherein the one or more first parameters comprises parameters selected from the list of parameters consisting of:
a block status of the first power conversion means;
an operational state of the main circuit breaker;
a time delay until a command for switching the main circuit breaker is issued;
a location of a fault;
a zone of the fault; and
one or more measurements of one or more electrical quantities.

7. The computer-implemented method of any one of the preceding claims, wherein the first protection zone is on the first AC side of the first power conversion means.

8. The computer-implemented method of any one of the preceding claims, wherein the method further comprises:
determining whether a telecommunication link is available between the first power conversion means and the second power conversion means; and
if the telecommunication link is not available, controlling, based on the fault status, the energy dissipation means to perform the dynamic braking in the power transmission network.

9. The computer-implemented method of any one of the preceding claims, wherein the method comprises:
determining if the DC voltage on the power transmission medium is greater than the second threshold voltage for a second predetermined time period; and if so
blocking and tripping the second power conversion means.

10. The computer-implemented method of any one of the preceding claims, wherein the method comprises:
determining a DC current of the power transmission means; and
if the DC current is substantially zero, operating one or more components on the power transmission means to isolate the power transmission means.

11. The computer-implemented method of any one of the preceding claims, wherein the second AC network comprises a power generation network, wherein optionally the power generation network comprises a renewable power generation network selected from the list of renewable power generation networks consisting of:
a wind-power generation network;
a solar-power generation network; and
a bio-power generation network.

12. A controller for controlling an energy dissipation means for dynamic braking in a power transmission network, the power transmission network comprising a first power conversion means having a first AC side and a first DC side, the first AC side being connected to a first AC network via a MCB, the first DC side being connected to a power transmission means, wherein the power transmission network further comprises a second power conversion means having a second AC side and a second DC side, the second AC side being connected to a second AC network, the second DC side being connected to the power transmission means, wherein the energy dissipation means is operably connected to the power transmission means, the controller comprising:
a memory; and
at least one processor;
wherein the memory comprises computer-readable instructions which when executed by the at least one processor cause the controller to:
monitor one or more first parameters associated with the power transmission network, optionally associated with a first protection zone of the power transmission network;
determine, based on the one or more first parameters, a fault status of the power transmission network; and
control, based on the fault status, the energy dissipation means to perform dynamic braking for the power transmission network, wherein the control is adaptive to cause the controller to:
adjust a threshold voltage for activating the energy dissipation means, and control the energy dissipation means to perform the dynamic braking when a DC voltage on the power transmission means exceeds the adjusted threshold voltage; or
control the energy dissipation means to perform dynamic braking until the MCB is determined to be in a non-conducting state.

13. The controller of claim 12, wherein the at least one processor causes the controller to control the energy dissipation means to perform the dynamic braking until the MCB is determined to be in a non-conducting state, by causing the controller to:
control the energy dissipation means to perform the dynamic braking until a signal is received that is indicative of the MCB being in the non-conducting state; or
control the energy dissipation means to perform the dynamic braking for a first predetermined time period, the first predetermined time period corresponding to a time for switching the main circuit breaker from a conducting state to the non-conducting state.

14. A power transmission network, comprising:
a first power conversion means having a first AC side and a first DC side;
a first AC network;
a MCB;
a second power conversion means having a second AC side and a second DC side;
a second AC network;
a power transmission means;
wherein the first AC side of the first power conversion means is connected to the first AC network via the MCB, the first DC side of the first power conversion means being connected to a power transmission means;
wherein the second AC side of the second power conversion means is connected to the second AC network, the second DC side of the second power conversion means is connected to the power transmission means;
an energy dissipation means operably connected to the power transmission means; and
the controller of any one of claims 12-13 for controlling the energy dissipation means.

15. A computer program comprising instructions which when executed by a processor of a controller for an energy dissipation means, causes the controller to perform the method of any one of claims 1-11.
